# EUROPEAN PATENT APPLICATION

(11) **EP 1 768 296 A2**
(43) Date of publication of application: **28.03.2007**
(21) Application number: 06019785.2
(22) Date of filing: 21.09.2006
(51) Int. Cl.: H04L 1/18

(54) **Method and apparatus for transmitting signaling data messages in a wireless communications system**

(30) Priority: 21.09.2005 US 596401 P
(71) Applicant: Innovative Sonic Limited, Tortola (VG)
(72) Inventor: Tseng, Li-Chih, Peitou Taipei City (TW); Jiang, Sam Shiaw-Shiang, Peitou Taipei City (TW)
(74) Representative: Schaeberle, Steffen

(57) **Abstract**

A wireless communications system operates in Acknowledged Mode. The wireless communications system has a control circuit (406), a central processing unit (408), and a memory (410) storing a program code (412). When transmitting signaling messages, the wireless communications system transmits a data packet a predetermined number of times greater than 1 to ensure that the data packet is received successfully.

## Description

This application claims the benefit of the filing date of U.S. Provisional Patent Application No. 60/596,401, filed on Sept. 21, 2005, the contents of which are hereby incorporated by reference.

The present invention relates to a method of transmitting signaling messages in a wireless communications system operating in Acknowledged Mode according to the pre-characterizing clause of claim 1.

In acknowledged mode (AM), in order to provide high data accuracy, a Radio Link Control (RLC) layer protocol utilizes an Automatic Retransmission Request (ARQ) process. A transmitter can accordingly trigger a polling request function to determine a data transmission status. When a receiver receives the polling request, the receiver triggers a status report function to respond to the transmitter with the data reception status. Use of the ARQ process (the polling and status report process) improves the accuracy of the data transmission and utilizes radio resources efficiently. However, the ARQ process is time consuming. Also, because of the nature of radio interference, the polling PDU and the status report may get lost during radio transmission. This will affect the transmission throughput of upper layer signaling messages. The polling process can also start when a PDU is a last PDU retransmitted by the transmitter. In this situation, if an error occurs when transmitting this last retransmitted PDU, the transmitter must wait for the polling timer to expire before it can retransmit the poll, which reduces transmission speed.

This in mind, the present invention aims at providing a method of transmitting signaling messages in a wireless communications system operating in Acknowledged Mode that reduces transmission delay, and increases transmission throughput and ease of use.

This is achieved by a method of transmitting signaling messages in a wireless communications system operating in Acknowledged Mode according to claim 1. The dependent claims pertain to corresponding further developments and improvements.

As will be seen more clearly from the detailed description following below, the claimed method of transmitting signaling messages in a wireless communications system operating in Acknowledged Mode includes transmitting a data packet carrying signaling messages or a part of the signaling messages a predetermined number of times greater than 1.

In the following, the invention is further illustrated by way of example, taking reference to the accompanying drawings. Thereof:
Fig. 1 is a diagram of an ARQ delay effect in a mobile communications system of the prior art through a last new transmitted PDU,
Fig. 2 is a diagram of utilizing a countdown value to start a status report process in a mobile communications system in the prior art,
Fig. 3 is a functional block diagram of a mobile communications device of the present invention,
Fig. 4 is a diagram of a program code of Fig. 3,
Fig. 5 is a flow chart diagram of a process according to the present invention,
Fig. 6 is a diagram of a realization of the process of Fig. 5,
Fig. 7 is a flow chart diagram of a process according to a second embodiment of the present invention,
Fig. 8 is a diagram of a realization of the process of Fig. 7, and
Fig. 9 is a flow chart diagram of a process according to a third embodiment of the present invention.

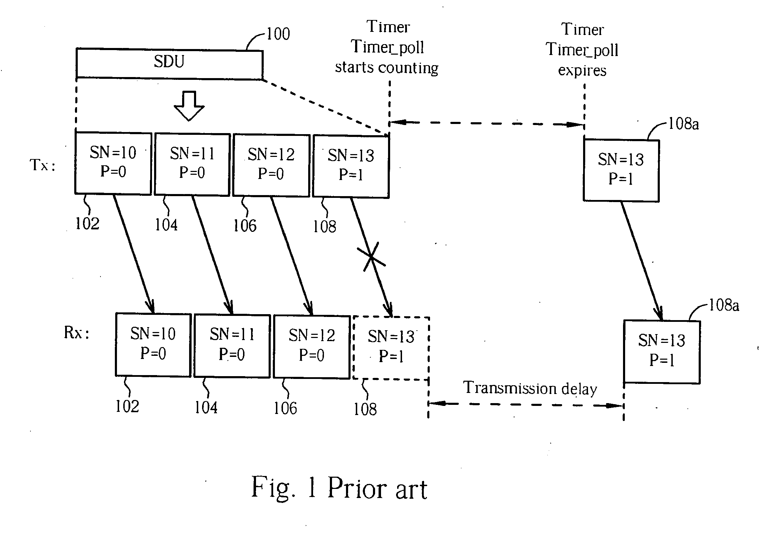

Please refer to Fig. 1, which is a diagram of starting a polling process in a mobile communications system of the prior art through a last new transmitted PDU. In Fig. 1, after the RLC layer segments an SDU 100 into four PDUs, the RLC layer sequentially outputs PDUs 102, 104, 106, 108 having respective SNs 10, 11, 12, 13. Because the PDU 108 is the last new transmitted PDU, the prior art sets a polling bit P of the PDU 108 to "1" to notify a receiver to send back a Status PDU. Simultaneously, a polling timer Timer_poll is started. If radio interference occurs when transmitting the PDU 108, such that the receiver does not accurately receive the PDU 108, the receiver will not transmit a Status PDU, and the transmitter will not be able to determine a status of data transmission. When the polling timer Timer_poll expires, if the transmitter still has not received a Status PDU, the transmitter will determine that an error occurred during transmission, and thus retransmit a PDU 108a with SN = 13 to resend the polling. In other words, when the error in transmission causes the PDU 108 to be unable to be received successfully by the receiver, the transmitter has to wait until the polling timer Timer_poll expires before it will retransmit the PDU 108a, which causes transmission delay. Taking voice communications as an example, before attempting to establish a call connection, the transmitter will first transmit a call setup signaling message to the receiver. The receiver must completely receive all of the call setup signaling message before the receiver can respond with a setup success signaling message. Only then is the call connection established. In this situation, if an error occurs when transmitting the last new PDU of the setup signaling message, the transmitter can not determine the status of the transmission and retransmit any missing PDUs in proper time. Thus, the time of establishing a call connection is increased, which inconveniences an end user.

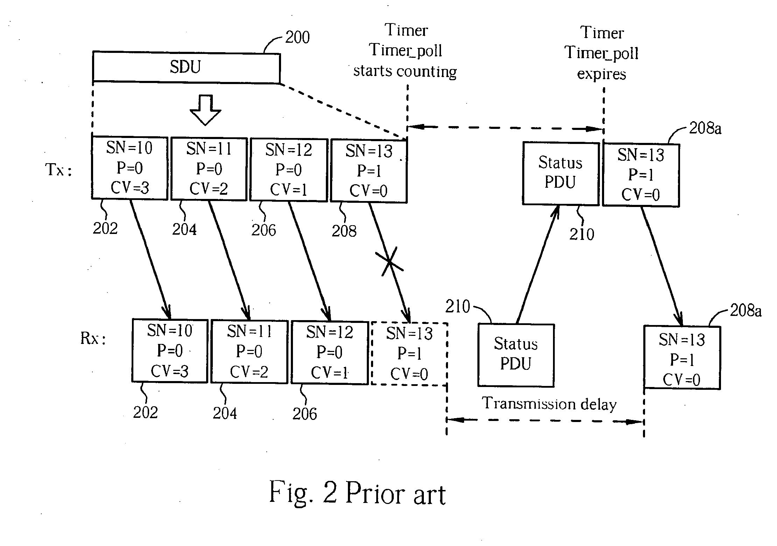

To improve the speed of transmitting the signaling message, the prior art provides a method of retransmitting the PDU based on a countdown value (CV). Please refer to Fig. 2. In Fig. 2, after the RLC layer segments an SDU 200, the RLC layer then sequentially transmits corresponding PDUs 202, 204, 206, 208 having SNs 10, 11, 12, 13, respectively. The PDUs 202, 204, 206, 208 are also set with a field used to indicate the CV. The CV represents the number of remaining PDUs used to carry the SDU 200. Thus, the respective CVs of the PDUs 202, 204, 206, 208 are 3, 2, 1, 0, respectively. According to the CV, the receiver can determine immediately whether any PDUs were dropped, and hence start the status report transfer procedure to request the transmitter retransmit the lost PDU. Thus, in Fig. 2, after the receiver receives the PDU 206, because the CV of the PDU 206 is "1," this represents that one more PDU, i.e. the PDU 208, will be received in the next transmission time interval. If an error occurs during transmission of the PDU 208, such that the receiver does not accurately receive the PDU 208 in the next transmission time interval after receiving the PDU 206, after a tolerance margin (not shown in Fig. 2) has passed, the receiver will transmit a Status PDU 210 to notify the transmitter that the PDU 208 has not been received. Based on the Status PDU 210, the transmitter will retransmit a PDU 208a having SN = 13. Thus, through use of the CV, the receiver can immediately request retransmission by sending the Status PDU 210 to the transmitter when the error occurs during transmission of the last new PDU. However, in practice, the amount of delay that can actually be saved by using the CV is very limited. Further, both the transmitter and the receiver must comprise algorithms to set and recognize the CV, which increases a burden on the system. In addition, if the transmitter only has one SDU remaining to transmit, and the SDU could be transmitted fully through one PDU, namely when the PDU is simultaneously a first and a last new PDU, the CV will be set to "0." If an error occurs when transmitting this PDU, the CV then becomes useless to the receiver for determining whether or not to transmit the Status PDU. In other words, not only is the method of starting retransmission of the PDU through the CV unable to reduce delay effectively, but also increases the burden to the system, and sometimes has no effect at all.

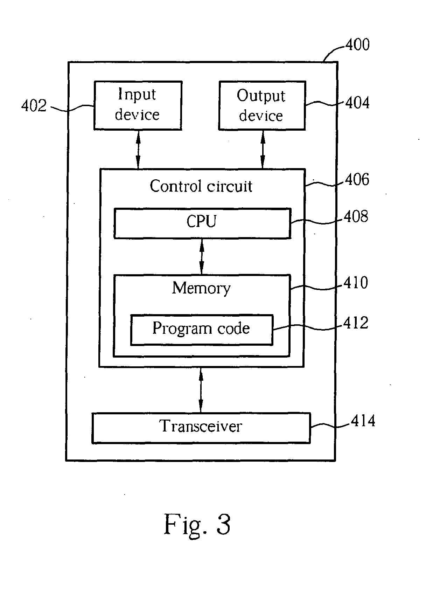

Please refer to Fig. 3, which is a functional block diagram of a wireless communications device 400. For the sake of brevity, Fig. 3 only shows an input device 402, an output device 404, a control circuit 406, a central processing unit (CPU) 408, a memory 410, a program code 412, and a transceiver 414 of the wireless communications device 400. In the wireless communications device 400, the control circuit 406 executes the program code 412 in the memory 410 through the CPU 408, thereby controlling an operation of the wireless communications device 400. The wireless communications device 400 can receive signals input by a user through the input device 402, such as a keyboard, and can output images and sounds through the output device 404, such as a monitor or a speaker. The transceiver 414 is used to receive and transmit wireless signals, transmitting received signals to the control circuit 406, and outputting signals generated by the control circuit 406 wirelessly. From a perspective of a communications protocol framework, the transceiver 414 can be seen as a portion of Layer 1, and the control circuit 406 can be utilized to realize functions of Layer 2 and Layer 3.

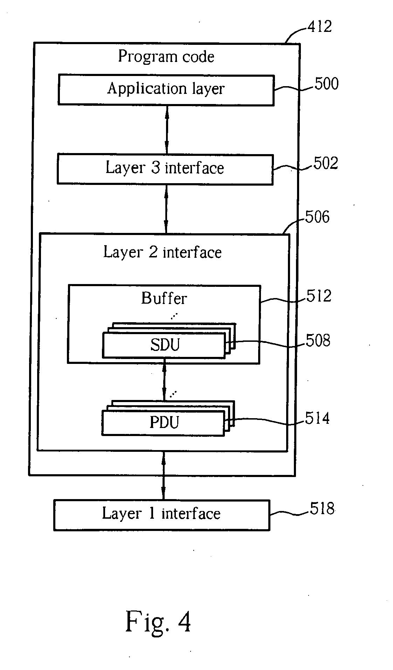

Please continue to refer to Fig. 4. Fig. 4 is a diagram of the program code 412 shown in Fig. 3. The program code 412 comprises an application layer 500, a Layer 3 interface 502, and a Layer 2 interface 506, and is coupled to a Layer 1 interface 518. When a signal is transmitted, the Layer 2 interface 506 forms a plurality of SDUs 508 according to data outputted by the Layer 3 interface 502, and stores the plurality of SDUs 508 in a buffer 512. Then, based on the SDUs 508 stored in the buffer 512, the Layer 2 interface 506 generates a plurality of PDUs 514, and sends the plurality of PDUs 514 to a destination terminal through the Layer 1 interface 518. In contrast, when a wireless signal is received, the signal is received through the Layer 1 interface 518, then outputted as PDUs 514 to the Layer 2 interface 506. The Layer 2 interface 506 restores the PDUs 514 to SDUs 508 and stores the SDUs 508 in the buffer 512. Last, the Layer 2 interface 506 delivers the SDUs 508 stored in the buffer 512 to the Layer 3 interface 502.

The wireless communications device 400 is preferably used in a 3G mobile communications system. When the wireless communications device 400 is operated in AM, to avoid the inefficient transmission and wasted transmission resources of the prior art, the present invention utilizes a following process to set a related algorithm in the program code 412 to resolve the problems of the prior art.

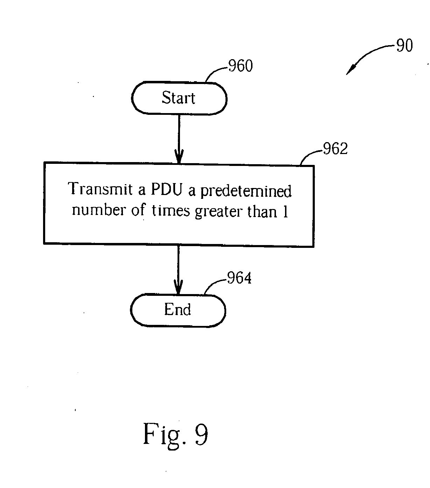

Please refer to Fig. 9, which is a flow chart of a process 90 according to the present invention method. The process 90 comprises steps of:
Step 960: Start.
Step 962: Transmit a PDU a predetermined number of times greater than 1.
Step 964: Finish.

According to the process 90 of the present invention, when the transmitter transmits a PDU, the transmitter transmits the PDU more than one time, so as to ensure that the PDU is transmitted successfully to the receiver. Of course, the present invention can be set to transmit every PDU more than once, or only a last new PDU could be transmitted multiple times to save system resources. In other words, the process 90 of the present invention increases a probability that a PDU will be accurately transmitted to the receiver by transmitting the PDU multiple times, thereby increasing transmission throughput, and reducing transmission delay.

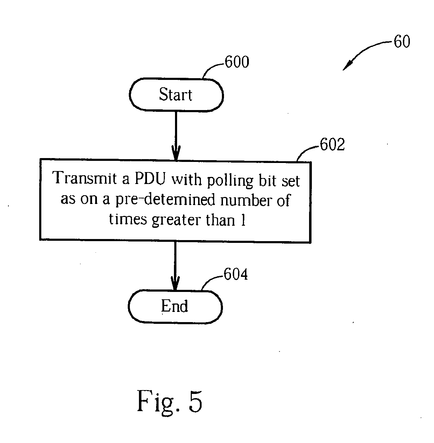

Please refer to Fig. 5, which is a flow chart of a process 60 according to the present invention. The process 60 comprises steps of:
Step 600: Start.
Step 602: Transmit a PDU with a polling bit set as on a predetermined number of times greater than 1.
Step 604: Finish.

According to the process 60 of the present invention, when the transmitter transmits a PDU with the polling bit P set as on, the transmitter transmits the PDU at least twice to ensure that the PDU can be accurately transmitted to the receiver successfully. In other words, the process 60 of the present invention increases a probability that the PDU will be accurately transmitted to the receiver by transmitting the PDU with the polling bit P set as on multiple times, thereby increasing transmission throughput. Particularly in the situation where the PDU is the last new PDU, the process 60 can effectively increase the transmission throughput, and reduce transmission delay.

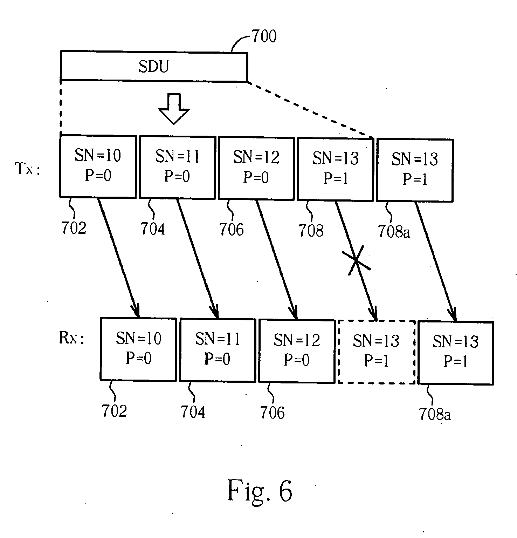

For example, in Fig. 6, after the RLC layer segments an SDU 700, the RLC layer sequentially transmits PDUs 702, 704, 706, 708 having respective SNs 10, 11, 12, 13, and sets a polling bit P of the PDU 708 to "1." According to the process 60 of the present invention, if the transmitter is set to transmit the last new PDU having the polling bit P set as "1" twice, then the PDU 708, 708a having the SN 13 will be transmitted twice. In this situation, if a transmission error occurs when transmitting the PDU 708, the receiver can still accurately receive the PDU 708a, and immediately send back a Status PDU. In other words, transmitting the PDU 708, 708a having the SN 13 and the polling bit P set as "1" twice can reduce the problem of transmission delay because of radio interference (shown in Fig. 1) in the prior art, namely the situation where the transmitter must wait for the polling timer Timer_poll to expire before retransmitting the poll. Thus, the process 60 of the present invention can increase the probability that the last new PDU having the polling bit set as "1" is accurately transmitted to the receiver, thereby increasing transmission throughput and increasing convenience of use. Taking voice communications as an example, before establishing a call connection, the transmitter transmits call setup message to the receiver, but the receiver must fully receive the setup message before responding with a corresponding setup success or setup complete message, and only after that can the call connection be established. In this situation, the process 60 of the present invention can decrease the probability that an error will occur during transmission of the last new PDU, which would affect transmission throughput, thereby reducing an amount of time required to set up the call connection and improve ease of use.

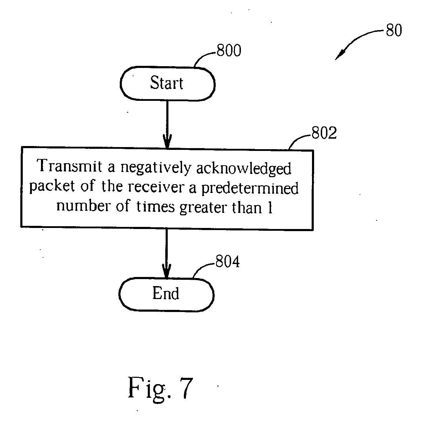

Please refer to Fig. 7, which is a flow chart of a process 80 according to the present invention. The process 80 comprises steps of:
Step 800: Start.
Step 802: Transmit a Negatively Acknowledged packet a predetermined number of times greater than 1.
Step 804: Finish.

Thus, according to the process 80, when the transmitter retransmits the Negatively Acknowledged PDU, the transmitter transmits the PDU at least twice to ensure that the PDU is successfully transmitted to the receiver. Of course, the present invention could also set the transmitter to transmit every Negatively Acknowledged PDU at least twice, or it could set the transmitter to retransmit only a last Negatively Acknowledged PDU of a sequence of Negatively Acknowledged PDUs at least twice. In this situation, when the transmitter transmits the last retransmitted PDU, a polling bit of the PDU is set as on, and the present invention transmits the PDU at least twice to increase a probability that the PDU will be successfully transmitted to the receiver, thereby increasing transmission throughput and reducing transmission delay.

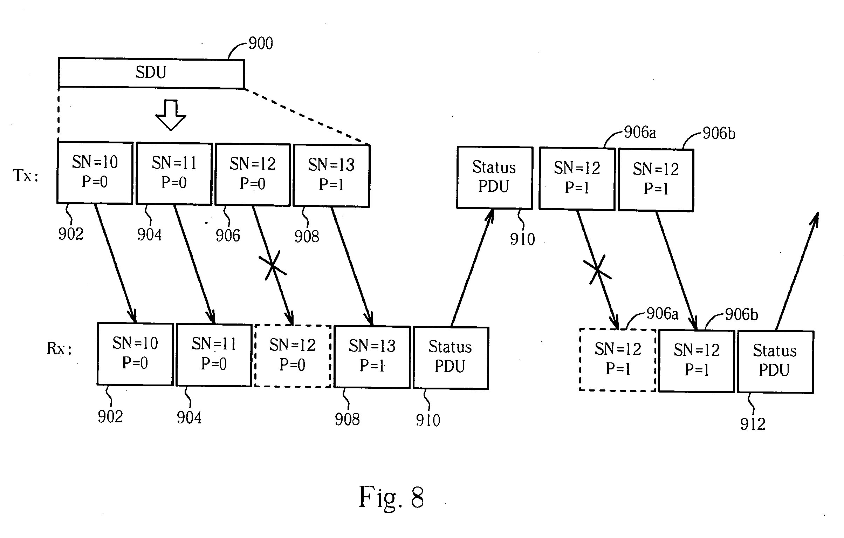

For example, as shown in Fig. 8, after the RLC layer segment an SDU 900, the RLC layer sequentially outputs PDUs 902, 904, 906, 908 having SNs 10, 11, 12, 13, respectively, and a polling bit P of the PDU 908 is set as "1." If an error occurs when transmitting the PDU 906 having the SN 12, such that the receiver is unable to receive the PDU 906 accurately, the receiver will respond with a Status PDU 910 to the transmitter to indicate that the PDU 906 having the SN 12 has not been received. Then, according to the Status PDU 910, the transmitter will retransmit a Negatively Acknowledged PDU twice (906a, 906b), and set a polling bit P of the Negatively Acknowledged PDU 906a, 906b to "1." If a transmission error occurs during transmission of the Negatively Acknowledged PDU 906a, the receiver can still accurately receive the retransmitted Negatively Acknowledged PDU 906b, and send back a Status PDU 912. Thus, in the process 80 of the present invention, when the error occurs during retransmission of the Negatively Acknowledged PDU 906a, the present invention can reduce the further transmission delay due to radio interference.

In summary, the present invention improves a probability of success in data transmission and a polling function by repeatedly transmitting a PDU, with a polling bit set as on or not, thereby reducing transmission delay, increasing transmission throughput and ease of use.

## Claims

1. A method of transmitting signaling messages in a wireless communications system operating in Acknowledged Mode **characterised by** transmitting a data packet a predetermined number of times greater than 1, the data packet carrying the signaling messages or a part of the signaling messages.

2. A wireless communications device (400) utilized as a transmitter in a wireless communications system for transmitting signaling messages operating in Acknowledged Mode comprising:
a control circuit (406) for realizing functions of the wireless communications device;
a central processing unit (408) for executing a program code (412) to operate the control circuit; and
a memory (410) for storing the program code (412);
**characterised in that** the program code (412) comprises:
transmitting a data packet a predetermined number of times greater than 1, the data packet carrying the signaling messages or a part of the signaling messages.

3. The method of claim land the wireless communications device (400) of claim 2, **characterised in that** the predetermined number of times is 2.

4. The method of claim 1 and the wireless communications device (400) of claim 2, **characterised in that** the data packet is a new data packet to be transmitted by a transmitter.

5. The method of claim 1 and the wireless communications device (400) of claim 2, **characterised in that** the data packet is a last data packet of a sequence of data packets to be transmitted by a transmitter.

6. The method of claim 1 and the wireless communications device (400) of claim 2, **characterised in that** the data packet is a data packet having a polling bit set as on.

7. The method of claim 1 and the wireless communications device (400) of claim 2, **characterised in that** the data packet is a Negatively Acknowledged data packet of a receiver response.

8. The method of claim 7 and the wireless communications device (400) of claim 2, **characterised in that** the Negatively Acknowledged data packet is a last Negatively Acknowledged data packet of a sequence of Negatively Acknowledged data packets of the receiver response.

9. The method of claim 1 and the wireless communications device (400) of claim 2 **characterised by** transmitting all new data packets to be transmitted a predetermined number of times greater than 1.

10. The method of claim 1 and the wireless communications device (400) of claim 2 **characterised by** transmitting all Negatively Acknowledged data packets a predetermined number of times greater than 1.
